# EUROPÄISCHE PATENTSCHRIFT

(11) **EP 0 498 802 B1**
(45) Veröffentlichungstag und Bekanntmachung des Hinweises auf die Patenterteilung: **01.12.1993**
(21) Anmeldenummer: 90913794.5
(22) Anmeldetag: 28.09.1990
(51) Int. Cl.: B60S 1/38

(54) **WISCHBLATT**
WIPER BLADE
RACLETTE D'ESSUIE-GLACE

(30) Priorität: 03.11.1989 DE 3936597
(43) Veröffentlichungstag der Anmeldung: 19.08.1992
(73) Patentinhaber: ROBERT BOSCH GMBH, 70442 Stuttgart (DE)
(72) Erfinder: GOHL, Walter, D-7031 Aidlingen (DE); ESPER, Friedrich, D-7250 Leonberg (DE)
(86) Internationale Anmeldenummer: DE9000737
(87) Internationale Veröffentlichungsnummer: WO9106451

(56) Entgegenhaltungen:
- FR-A- 2 566 726
- GB-A- 593 775

## Beschreibung

### Stand der Technik

Die Erfindung geht aus von einem Wischblatt nach der Gattung des Hauptanspruchs. Es ist schon ein solches Wischblatt bekannt (DE-A-24 05 484 bzw. DE-A-23 32 408), bei dem das Tragelement aus Gründen der gleichmäßigen Verteilung des gegen die zu wischende Scheibe gerichteten Anpreßdruckes des Wischblatts von seinen beiden Enden aus zu seinem Mittelbereich eine erhebliche Vergrößerung des Querschnitts erfährt. Dadurch ergibt sich jedoch eine beachtliche Tragelementhöhe, welche einerseits das Wischblatt anfällig gegen das unerwünschte Abheben von der Scheibe bei hohen Fahrgeschwindigkeiten macht und andererseits einen vom Styling her gesehen sehr ungünstigen, relativ hohen Ablageschacht in der Fahrzeugkarosserie erfordert, wenn das Wischblatt außerhalb des von ihm überstrichenen Wischfeldes unter einer Karosserieschürze abgelegt werden soll.

### Vorteile der Erfindung

Das erfindungsgemäße Wischblatt mit den kennzeichnenden Merkmalen des Hauptanspruchs hat demgegenüber den Vorteil, daß sich trotz besonders niedriger Bauweise eine den jeweiligen Erfordernissen hinsichtlich der Druckverteilung bei den unterschiedlichsten Scheibenkrümmungen gerecht werdende Auslegung des Tragelementes ergibt. Dabei werden die Schichtstofflagen entsprechend eingebaut und darüber hinaus den Bedingungen gerecht werdende Fasermaterialien gewählt. Eine weitere Anpassung kann noch durch die Dimensionierung des Kernstücks und eine entsprechende Materialwahl für das Kernstück erreicht werden.

Durch die in den Unteransprüchen aufgeführten Maßnahmen sind vorteilhafte Weiterbildungen und Verbesserungen des im Hauptanspruch angegebenen Wischblatts möglich.

### Zeichnung

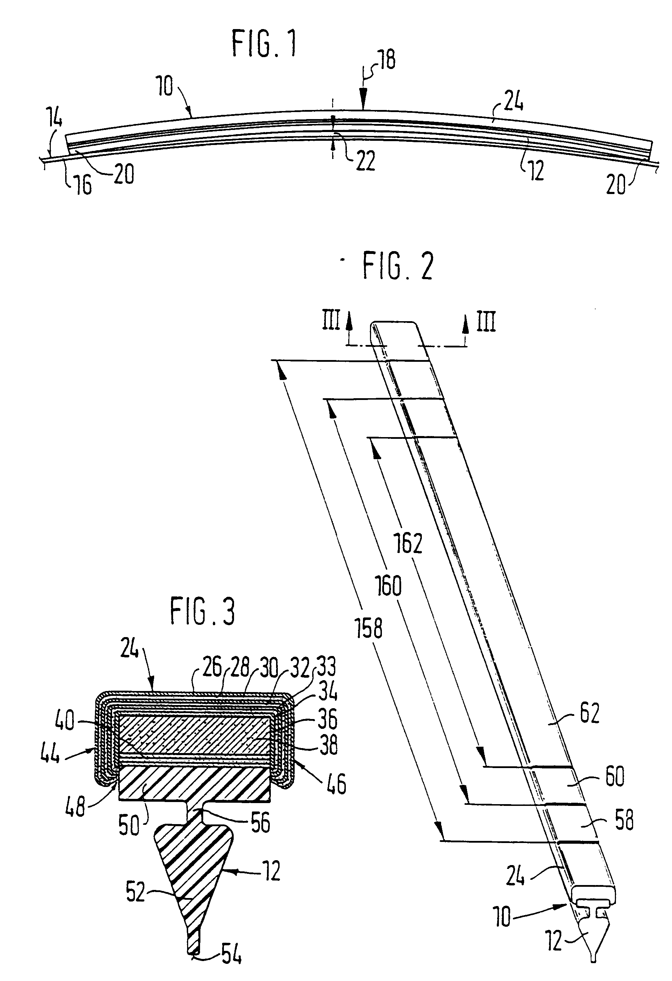

Ein Ausführungsbeispiel der Erfindung ist in der Zeichnung dargestellt und in der nachfolgenden Beschreibung näher erläutert. Es zeigen Figur 1 eine Seitenansicht eines auf die zu wischende Scheibe ohne Anpreßdruck aufgesetzten Wischblatts, Figur 2 eine perspektivische Darstellung des Wischblatts gemäß Figur 1, in vergrößerter, gestreckter Darstellung und Figur 3 einen Schnitt durch das Wischblatt entlang der Linie III-III in Figur 2, in vergrößerter Darstellung.

### Beschreibung des Ausführungsbeispiels

Figur 1 zeigt ein Wischblatt 10, das mit einer aus einem elastischen Material bestehenden Wischleiste 12 auf einer Oberfläche 14 einer zu wischenden Scheibe 16 aufgesetzt ist. Während des Betriebs des Wischblatts, also wenn es durch einen nicht dargestellten Wischerarm gegen die Scheibe 16 in Richtung des Pfeiles 18 gedrückt wird, wird es quer zu seiner Längserstreckung über die Scheibe 16 bewegt. Dabei liegt die Wischleiste 12 über ihre gesamte Länge an der Scheibe 16 an. Wie Figur 1 zeigt, ist die Krümmung des Wischblatts 10 stärker als die Krümmung der Scheibe 16, so daß das auf die Scheibenoberfläche 14 aufgesetzte Wischblatt 10 lediglich mit seinen beiden Enden 20 auf der Scheibe aufliegt. Zwischen diesen beiden Enden 20 verbleibt ein zum Mittelbereich des Wischblatts 10 hin sich vergrößernder Spalt 22, der jedoch verschwindet, wenn das Wischblatt in Richtung des Pfeiles 18 belastet wird. Dazu ist die Wischleiste 12 durch ein langgestrecktes Tragelement 24 gehalten. Das Tragelement 24 ist aus einem elastischen Kunststoff gefertigt und hat hinsichtlich seiner Längserstreckung eine stärkere Krümmung als die zu wischende Scheibe 16. Wenn das Wischblatt 10 in Richtung des Pfeiles 18 belastet wird, wird das Wischblatt 10 an seinen Enden 20 zur Scheibe 16 hin vorgespannt, so das der Anpreßdruck (Pfeil 18) auch an den Enden 20 des Wischblatts 10 vorhanden ist. Das Wischblatt 10 ist also in unbelasteten Zustand in seiner Längserstreckung gegenüber der Scheibe 16 konvex gekrümmt.

Um zu erreichen, daß das Tragelement 24 eine den Erfordernissen gerecht werdende Elastizität, andererseits aber auch die erforderliche Steifigkeit aufweist, ist das das Tragelement mittels vorzugsweise in dessen Längserstreckung ausgerichteten Fasern verstärkt, wobei diese in wenigstens zwei Schichten 26 bis 36 auf ein langgestrecktes Kernstück 38 aufgebracht und mit diesem verbunden sind. Jede dieser Schichten ist aus mehreren Faservlieslagen aufgebaut. Dabei wird vorzugsweise darauf geachtet, daß die verschiedenen Faservlieslagen aus Fasern unterschiedlicher Festigkeit hergestellt sind. Die Faservlieslagen 26 bis 36 werden untereinander und auch mit dem Kernstück 38 durch ein duroplastisches Harz miteinander verbunden. Bestimmte Faservlieslagen, die eine geringere Festigkeit aufweisen sollen, können beispielsweise aus Asbestfasern, Glasfasern, Polyesterfasern, Polyamidfasern oder dergleichen bestehen. Dabei sollen vorzugsweise Kurzfasern mit 1 bis 6 mm Länge Verwendung finden. Bei den Faservlieslagen aus Fasern höherer Festigkeiten werden zum Aufbau der Vliese vorzugsweise Kohlenstoffasern, Aramidfasern oder dergleichen verwendet. Als Verbindungsmittel können zweckmäßigerweise duroplastische Harze, wie ungesättigtes Polyesterharz, Phenolharz, Epoxidharz, Triazinharz oder dergleichen Verwendung finden. Wie insbesondere Figur 3 zeigt, hat das Kernstück einen im wesentlichen rechteckigen Querschnitt. Auf das Kernstück 38 können beispielsweise zwei Schichtstofflagen, bestehend aus vier Asbestfaservlieslagen und drei zwischen diesen eingebetteten Kohlenstoffaservlieslagen aufgebracht werden. Um einen besonders stabilen, kastenförmigen Aufbau des Tragelement 24 zu erreichen, ist erfindungsgemäß vorgesehen, daß zwei Schichtstofflagen U-förmig mit dem im Querschnitt rechteckigen Kernstück 38 verbunden sind und daß wenigstens eine weitere Schichtstofflage 40 mit der vierten Seite des Kerns 38 verbunden ist. Auch wenn dies in der Zeichnung nicht erkennbar ist, kann es von Vorteil sein, wenn das Kernstück aus Holz gefertigt einen mehrschichtigen Aufbau aufweist, wobei das Holz selbst eine Dichte von etwas ρ = 0,5 g/cm₃ hat. In bestimmten Fällen kann es aber auch zweckmäßig sein, das Kernstück 38 aus einem Schaumstoff mit einer Dichte von ρ ≦ 0,5 g/cm₃ herzustellen.

Wie Figur 3 weiter zeigt, sind die U-Schenkel 44, 46 des kastenförmigen Vlieslagenaufbaus mit den kurzen Seiten des im Querschnitt rechteckigen Kernstücks 38 verbunden. Dabei ragen die Schenkel 44 und 46 etwas über die Schichten 40 hinaus, so daß zwischen den freien Enden der Schenkel 44 und 46 ein nutartiger Kanal 48 verbleibt. In diesen nutförmigen Kanal 48 ist ein Fußteil 50 der Wischleiste 12 eingesetzt und durch Kleben oder dergleichen mit dem Tragelement 24 fest verbunden. Die Wischleiste 12 hat weiter eine Wischlippe 52, welche mit ihrer freien Wischkante 54 auf der zu wischenden Scheibe 16 aufliegt. Die Wischlippe 52 ist mit dem Fußteil 50 über einen sogenannten Kippsteg 56 verbunden.

Wie aus Figur 2 ersichtlich ist, sind auf der von der zu wischenden Scheibe 16 abgewandten Seite des Kernstücks 38 mehrere Schichtstofflagen 58, 60, 62 unterschiedlicher Länge aufeinander geschichtet. Die Faservlies- oder Schichtstofflagen 58 bis 60 sind ihrer Länge 158, 160, 162 nach geordnet, und zwar derart, daß als oberste Faservlieslage 62 diejenige mit der kürzesten Länge 162 zu liegen kommt.

Auf diese Weise wird eine besonders gunstige Vorspannung des Wischblatts gegenüber der zu wischenden Scheibe 16 erreicht, so daß der Anpreßdruck (Pfeil 18) ordnungsgemäß auf die Wischleiste 12 übertragen wird. Diese besondere Anpassung kann sowohl durch die Wahl des Materials für die einzelnen Schichtstofflagen und/oder durch die Wahl des Harzes und/oder durch die Anzahl und die Länge der Schichtstofflagen den Erfordernissen entsprechend beeinflußt werden.

Besonders vorteilhaft ist die Kombination der Verwendung einer Faservlieslage, z. B. aus Mineralfasern mit einer längsorientierten Hochfestfaserlage aus Kohlenstoffaser oder Aramid oder die Kombination einer Flechtstruktur aus textilen Fasern mit längsorientierten Hochfestfasern aus Kohlenstoff oder Aramid in einer duroplastischen Kunststoff-Matrix aus ungesättigtem Polyesterharz. In diese Schichtpreßstoffe ist erfindungsgemäß ein die Querkräfte aufnehmender Holz- oder Schaumstoffkern eingebettet, wobei ein rechteckiger Querschnitt des Kerns einerseits besonders hohe Querkräfte in Längsrichtung des Kernquerschnitts (Richtung der längeren Seite des Kernquerschnittts) aufnehmen, andererseits besonders leicht ausgeführt werden kann.

Das beispielsweise in den Schichtstofflagen 11 - 13 verwendete Mineralfaservlies mit einem Gewicht von ca. 300 g/m² bei einer Dicke von ca. 0,4 mm ungetränkt, ca. 0,55 mm mit Harz getränkt, wird mit Kohlenstoffaserlagen und dem Kern 10 mittels eines ungesättigten Polyesterharz verbunden, so daß sich das Gewicht nochmals etwa verdoppelt.

## Patentansprüche

1. Wischblatt (10) zum Überstreichen von Kraftfahrzeugscheiben (16), mit einem langgestreckten, zur Scheibe (16) belasteten Tragelement (24) für eine auf der Scheibe (16) aufliegende Wischleiste (12), das aus einem elastischen Kunststoff besteht und in seiner Längserstreckung gegenüber der Scheibe (16) eine Krümmung aufweist, die bei unbelastetem Wischblatt (10) stärker als die Krümmung der zu wischenden Scheibe (16) ist, dadurch gekennzeichnet, daß das Tragelement (24) mittels vorzugsweise in dessen Längserstreckung ausgerichteten Fasern verstärkt ist, wobei diese in wenigstens zwei Schichten (26 bis 36) auf ein langgestrecktes Kernstück (38) des Tragelements (24) aufgebracht und mit diesem verbunden sind.

2. Wischblatt nach Anspruch 1, dadurch gekennzeichnet, daß die Schichten (26 bis 36) aus mehreren Faservlieslagen aufgebaut sind.

3. Wischblatt nach Anspruch 1, dadurch gekennzeichnet, daß die Schichten aus mehreren geflochtenen Faserlagen aufgebaut sind.

4. Wischblatt nach Anspruch 2 oder 3, dadurch gekennzeichnet, daß Faser- oder Faservlieslagen mit Fasern unterschiedlicher Festigkeit vorgesehen sind.

5. Wischblatt nach einem der Anspruche 1 bis 4, dadurch gekennzeichnet, daß die Faser- oder Faservlieslagen untereinander und mit dem Kernstück (38) durch ein duroplastisches Harz verbunden sind.

6. Wischblatt nach einem der Ansprüche 4 oder 5, dadurch gekennzeichnet, daß die Faser- oder Faservlieslagen aus Fasern niedriger Festigkeit, insbesondere aus Asbest oder Glas, Polyester, Polyamid, Baumwolle oder dergleichen bestehen, wobei vorzugsweise eine Kurzfaser der Klasse 3 bis 4 Verwendung findet.

7. Wischblatt nach einem der Ansprüche 3 bis 6, dadurch gekennzeichnet, daß die Faser- oder Faservlieslagen aus Fasern hoher Festigkeit, aus Kohlenstoffasern, Aramidfasern oder dergleichen bestehen.

8. Wischblatt nach einem der Ansprüche 1 bis 7, dadurch gekennzeichnet, daß als Verbindungsmittel duroplastische Harze wie ungesättigtes Polyesterharz, Phenolharz, Epoxidharz, Triazinharz oder dergleichen Verwendung finden.

9. Wischblatt nach einem der Ansprüche 1 bis 8, dadurch gekennzeichnet, daß auf das im wesentlichen im Querschnitt rechteckige Kernstück (38) zwei Schichtstofflagen (26 bis 36) bestehend aus vier Mineralfaser- oder Mineralfaservlieslagen und drei zwischen diesen eingebetteten Kohlenstoffaservlieslagen aufgebracht sind.

10. Wischblatt nach Anspruch 9, dadurch gekennzeichnet, daß zwei Schichtstofflagen U-förmig mit dem im Querschnitt rechteckigen Kernstück (38) verbunden sind und daß wenigstens eine weitere Schichtstofflage mit der vierten Seite des Kerns (38) verbunden ist.

11. Wischblatt nach einem der Ansprüche 1 bis 10, dadurch gekennzeichnet, daß das aus Holz mit einer Dichte von ρ = 0,5 g/cm³ gefertigte Kernstück (38) aus mehreren Schichten aufgebaut ist.

12. Wischblatt nach einem der Ansprüche 1 bis 10, dadurch gekennzeichnet, daß das Kernstück aus einem Schaumstoff mit einer Dichte von ρ ≦ 0,5 g/cm³ besteht.

13. Wischblatt nach einem der Ansprüche 5 bis 12, dadurch gekennzeichnet, daß zwei Schichtstofflagen (26 bis 36) bestehend aus vier Faservlieslagen und drei darin eingebetteten Kohlenstoffaservlieslagen U-förmig mit dem im Querschnitt rechteckigen Kernstück (38) verbunden sind, daß eine weitere Schichtstofflage bestehend aus zwei Asbestfaservlieslagen und einer in Längsrichtung orientierten Kohlenstoffaservlieslage mit der vierten Seite des Kerns verbunden ist und daß als Verbindungsmittel ungesättigtes Polyesterharz Verwendung findet.

14. Wischblatt nach Anspruch 13, dadurch gekennzeichnet, daß die Schenkel (44, 46) der U-förmigen Schichtstofflagen (26 bis 36) mit den kurzen Seiten des im Querschnitt rechteckigen Kernstücks (38) verbunden sind und daß die Schenkel über die weiterhin vorhandene einzelne Schichtstofflage (40) hinausragen.

15. Wischblatt nach Anspruch 14, dadurch gekennzeichnet, daß zwischen den freien Enden der Lagenschenkel (44, 46) ein nutförmiger Kanal (48) verbleibt, in welchen die Wischleiste (12) mit einem Fußteil (50) eingebracht ist.

16. Wischblatt nach Anspruch 15, dadurch gekennzeichnet, daß der Fußteil (50) der Wischleiste (12) mit dem Tragelement (24) fest verbunden ist.

17. Wischblatt nach einem der Ansprüche 2 bis 16, dadurch gekennzeichnet, daß auf der von der zu wischenden Scheibe (16) abgewandten Seite des Kernstücks (38) mehrere Schichtstofflagen (26 bis 36) unterschiedlicher Länge (158, 160, 162) aufeinander geschichtet sind, wobei die Schichtstofflagen ihrer Länge (158, 160, 162) nach geordnet derart geschichtet sind, daß als oberste Faservlieslage (62) diejenige mit der kürzesten Länge (162) zu liegen kommt.

## Claims

1. Wiper blade (10) for sweeping over motor vehicle windows (16), having an elongated supporting element (24), stressed towards the window (16), for a wiper strip (12) lying on the window (16), which wiper blade (10) consists of a flexible plastic and has in its longitudinal extent a curvature with respect to the window (16), which curvature, with an unstressed wiper blade (10), is greater than the curvature of the window (16) to be wiped, characterised in that the supporting element (24) is reinforced by means of fibres preferably aligned in its longitudinal extent, said fibres being applied in at least two layers (26 to 36) onto an elongated core piece (38) of the supporting element (24) and being bonded to the latter.

2. Wiper blade according to Claim 1, characterised in that the layers (26 to 36) are built up from a plurality of non-woven fabric layers.

3. Wiper blade according to Claim 1, characterised in that the layers are built up from a plurality of braided fibre layers.

4. Wiper blade according to Claim 2 or 3, characterised in that fibre or non-woven fabric layers with fibres of different strength are provided.

5. Wiper blade according to one of Claims 1 to 4, characterised in that the fibre layers or non-woven fabric layers are bonded to one another and to the core piece (38) by a thermosetting resin.

6. Wiper blade according to one of Claims 4 or 5, characterised in that the fibre layers or non-woven fabric layers consist of fibres of low strength, in particular of asbestos or glass, polyester, polyamide, cotton or the like, a short fibre of class 3 to 4 preferably being used.

7. Wiper blade according to one of Claims 3 to 6, characterised in that the fibre layers or non-woven fabric layers consist of high-strength fibres, of carbon fibres, aramid fibres or the like.

8. Wiper blade according to one of Claims 1 to 7, characterised in that the binder employed is a thermosetting resin such as unsaturated polyester resin, phenolic resin, epoxy resin, triazine resin or the like.

9. Wiper blade according to one of Claims 1 to 8, characterised in that, on the core piece (38) which is substantially rectangular in cross-section, there are applied two laminate layers (26 to 36) consisting of four mineral fibre layers or non-woven mineral fibre fabric layers and three non-woven carbon fibre fabric layers embedded between these.

10. Wiper blade according to Claim 9, characterised in that two laminate layers are bonded in a U-shaped manner to the core piece (38) which is rectangular in cross-section and in that at least one further laminate layer is bonded to the fourth side of the core (38).

11. Wiper blade according to one of Claims 1 to 10, characterised in that the core piece (38) made of wood having a density of ρ = 0.5 g/cm³ is built up from a plurality of layers.

12. Wiper blade according to one of Claims 1 to 10, characterised in that the core piece consists of a foam having a density of ρ ≦ 0.5 g/cm³.

13. Wiper blade according to one of Claims 5 to 12, characterised in that two laminate layers (26 to 36) consisting of four non-woven fabric layers and three non-woven carbon fibre fabric layers embedded therein are bonded in a U-shaped manner to the core piece (38) which is rectangular in cross-section and in that a further laminate layer, consisting of two non-woven asbestos fibre fabric layers and a non-woven carbon fibre fabric layer oriented in the longitudinal direction is bonded to the fourth side of the core and in that an unsaturated polyester resin is used as binder.

14. Wiper blade according to Claim 13, characterised in that the legs (44, 46) of the U-shaped laminate layers (26 to 36) are bonded to the short sides of the core piece (38) which is rectangular in cross-section and in that the legs project beyond the individual laminate layer (40) which is also present.

15. Wiper blade according to Claim 14, characterised in that there remains between the free ends of the layer legs (44, 46) a groove-shaped channel (48) into which the wiper strip (12) is introduced by a base part (50).

16. Wiper blade according to Claim 15, characterised in that the base part (50) of the wiper strip (12) is firmly bonded to the supporting element (24).

17. Wiper blade according to one of Claims 2 to 16, characterised in that on the side of the core piece (38) facing away from the window (16) to be wiped, a plurality of laminate layers (26 to 36) of different lengths (158, 160, 162) are laminated one on top of the other, the laminate layers being laminated in the order of their length (158, 160, 162) in such a manner that the layer with the shortest length (162) comes to lie as the uppermost non-woven fabric layer (62).

## Revendications

1. Raclette d'essuie-glace (10) pour le balayage de vitres de véhicules automobiles, avec un élément porteur (24) allongée sous charge sur la vire (16), destiné à une lame d'essuyage (12) appuyant sur la vitre (14), qui est composé d'une matière plastique élastique et a une courbure dans son développement longitudinal par rapport à la vitre (16), courbure qui lorsque la raclette (10) n'est pas sous charge est supérieure à la courbure de la vitre à essuyer (16), caractérisée :
- en ce que l'élément porteur (24) est renforcé au moyen de fibres dirigées dans le sens de sa longueur, celles-ci étant introduites au moins en deux couches (26 à 36) sur une pièce centrale allongée (38) de l'élément porteur et étant liées à celui-ci.

2. Raclette d'essuie-glace selon la revendication 1, caractérisée :
- en ce que les couches (26 à 36) sont constituées de plusieurs couches de non tissé de fibre.

3. Raclette d'essuie-glace selon la revendication 1, caractérisée :
- en ce que les couches sont constituées de plusieurs couches de fibres tressées.

4. Raclette d'essuie-glace selon la revendication 2 ou la revendication 3, caractérisée :
- en ce que les couches de fibres ou de non tissé sont prévues avec des fibres de solidité différente.

5. Raclette selon l'une des revendications 1 à 4, caractérisée :
- en ce que les couches de fibre ou de non tissé de fibre sont liées entre elles, et avec la pièce centrale (38) par une résine duroplastique.

6. Raclette d'essuie-glace selon l'une des revendications 4 ou 5, caractérisée :
- en ce que les couches de fibres ou de non tissu sont composées de fibres de faible solidité, en particulier en amiante ou en verre, en polyester, en polyamide, en coton ou équivalent, une fibre courte de la classe 3 à 4 trouvant utilisation de préférence.

7. Raclette d'essuie-glace selon l'une des revendications 3 à 6,
- en ce que les couches de films ou de non tissé sont composées de fibres de grande solidité, en particulier de fibres de carbone, de fibres d'aramide ou équivalentes.

8. Raclette d'essuie-glace selon l'une des revendications 1 à 7, caractérisée,
- en ce qu'on utilise comme agent de liaison des résines duroplastiques comme la résine de polyester insaturée, de la résine de phénol, de la résine époxy, de la résine triazine ou équivalentes.

9. Raclette d'essuie-glace selon l'une des revendications 1 à 8, caractérisée :
- en ce que sont introduites sur la piece centrale (38) de section transversale rectangulaire deux couches de stratifié (26 à 36) se composant de 4 couches de fibres minérales ou de non tissé de fibres minérales et trois couches de non tissé de fibres de carbone insérées entre ces dernières.

10. Raclette d'essuie-glace selon la revendication 9, caractérisée :
- en ce que deux couches stratifiées en forme de U sont liées avec la pièce centrale (38) de section rectangulaire et ;
- en ce qu'au moins une autre couche stratifiée est liée au quatrième côté du noyau (38).

11. Raclette d'essuie-glace selon l'une des revendications 1 à 10, caractérisée :
- en ce que la piece centrale (38) produite en bois avec une densité de ρ = 0,5 g/cm³ est construite en plusieurs couches.

12. Raclette d'essuie-glace selon l'une des revendications 1 à 10, caractérisée :
- en ce que la pièce centrale est composée d'un produit alvéolaire ayant une densité de ρ ≦ 0,5 g/cm³.

13. Raclette d'essuie-glace selon l'une des revendications 5 à 12, caractérisée :
- en ce que deux couches de stratifié (26 à 36) composées de quatre couches de non tissé de fibres et trois couches de non tissé de fibres de carbone enrobées dedans en forme de U son reliées avec la pièce centrale (38) de section transversale rectangulaire,
- en ce qu'une autre couche de stratifié composée de deux couches de non tissu de fibres d'amiante et d'une couche de non tissé de fibres de carbone orientée dans le sens longitudinal est liée au quatrième côté du noyau et,
- en ce que comme agent de liaison on utilise de la résine de polyester non saturée.

14. Raclette d'essuie-glace selon la revendication 13, caractérisée :
- en ce que les branches (44, 46) des couches de stratifié en forme de U (26 à 36) sont liées au petit côté de la pièce centrale (38) de section transversale rectangulaire et,
- en ce que les branches dépassent de la couche de stratifié (40) séparée constante.

15. Raclette d'essuie-glace selon la revendication 14, caractérisée,
- en ce qu'aux extrémités libres des branches des couches (44, 46) demeure un canal (48) en forme de rainure, dans lequel est insérée la lame d'essuyage (12) par sa partie de base (50).

16. Raclette d'essuie-glace selon la revendication 15, caractérisée :
- en ce que la pièce de base (50) de la lame d'essuyage (12) est fixée sur l'élément porteur (24).

17. Raclette d'essuie-glace selon l'une des revendications 2 à 16, caractérisée :
- en ce que sur la face de la pièce centrale (38) éloignée de la vitre (16) à nettoyer sont empilées plusieurs couches de stratifié (26 à 36) de longueur différente (158, 160, 162), les couches de stratifié étant disposées dans l'empilage selon leur longueur (158, 160, 162), de sorte que comme couche de non tissé supérieure (62) se situe celle de longueur la plus courte (162).
